# EUROPEAN PATENT APPLICATION

(11) **EP 4 782 349 A1**
(43) Date of publication of application: **29.07.2026**
(21) Application number: 25864540.7
(22) Date of filing: 29.04.2025
(51) Int. Cl.: B65B 41/16, B65B 61/00, B65B 57/02, B65B 11/02, B65B 51/06

(54) **DEVICE FOR AUTOMATED WINDING OF FOAM SHEET ON COLUMNAR FIBER FILAMENT PRODUCT AND PACKAGING METHOD**

(30) Priority: 14.10.2024 CN 202411430241
(71) Applicant: Taishan Fiberglass Inc., Taian, Shandong 271000 (CN)
(72) Inventor: LIU, Yongqing, Taian, Shandong 271000 (CN); ZHOU, Guangyi, Taian, Shandong 271000 (CN); ZHANG, Dedong, Taian, Shandong 271000 (CN); ZHU, Huaiyu, Taian, Shandong 271000 (CN); ZHU, Xinwen, Taian, Shandong 271000 (CN); WAN, Zheng, Taian, Shandong 271000 (CN); GAO, Zhaolin, Taian, Shandong 271000 (CN); NING, Chao, Taian, Shandong 271000 (CN)
(74) Representative: Dehns Germany Partnerschaft mbB
(86) International application number: PCT/CN2025/091971
(87) International publication number: WO 2026/081456

(57) **Abstract**

The present invention provides a sponge membrane automatic winding apparatus for a columnar fiber roving product, and a packaging method. The sponge membrane automatic winding apparatus includes: a sponge membrane supply mechanism including a sponge membrane cutting machine and a sponge membrane feeding mechanism that respectively cut a whole roll of sponge membrane to obtain a rectangular sponge membrane and transfer the rectangular sponge membrane; a double-sided adhesive sticking mechanism that sticks one piece of double-sided adhesive at each of two ends of the rectangular sponge membrane; and a sponge membrane smoothing and pressing mechanism that sticks the double-sided adhesive on a roving; and further includes an overall apparatus frame, where the sponge membrane feeding mechanism, the double-sided adhesive sticking mechanism and the sponge membrane smoothing and pressing mechanism are arranged on the overall apparatus frame respectively. The apparatus can implement automatic supplementing, sticking, feeding, wrapping, pressing, etc. of a sponge membrane. This helps reduce employee workload, improve packaging efficiency, lower procurement cost of the sponge membrane, and increase corporate profits.

## Description

### Technical Field

The present invention belongs to the technical field of reinforced fiber production, and particularly relates to a sponge membrane automatic winding apparatus for a columnar fiber roving product, and a packaging method.

### Background

As the demand for quality of life continues to increase, materials with high strength and low weight are gradually replacing metal materials in everyday life. Glass fiber and other reinforced fibers are important basic materials for industrial basis strengthening and are widely used in fields such as construction materials, clean energy, and aerospace.

Fiber-reinforced materials are able to serve as reinforcing substrates to be mixed with resins to form excellent plastic materials, so plastics have higher impact toughness, insulation properties, flexural tensile strength, and creep resistance. However, the fibers are hard and brittle, and are prone to breaking and pilling after impact, especially damaging during transfer and transportation, which causes damage and affects the downstream manufacturing process.

Thus, columnar fiber-type roving products are formed through a process of drawing and crimping. During production, a packaging process needs to not only package qualified products, but also take certain measures to make sure the products work properly when they get to customers.

Currently, to guarantee that no product collisions occur during transportation, the columnar fiber-type roving is usually wrapped in a protective film and then covered with a 3-5 mm thick sponge membrane. The sponge membrane is a purchased finished product. For use, double-sided adhesive at two ends is manually peeled off, wrapped around the outside of the product, and pressed down to ensure a tight fit. The packaging process is labor-intensive and inefficient.

### Summary

In order to reduce operations of workers and reduce work intensity, the present application provides a sponge membrane automatic winding apparatus for a columnar fiber roving product, and a packaging method, which are able to implement automatic supplementing, sticking, feeding, wrapping, pressing, etc. of a sponge membrane and improve automation of a packaging process of the columnar fiber roving product. The above technical objective of the present invention is achieved by the following technical solutions:
In an aspect, the present invention provides a sponge membrane automatic winding apparatus for a columnar fiber roving product. The sponge membrane automatic winding apparatus includes: a sponge membrane supply mechanism, where the sponge membrane supply mechanism includes a sponge membrane cutting machine and a sponge membrane feeding mechanism that are respectively configured to cut a whole roll of sponge membrane to obtain a rectangular sponge membrane and transfer the rectangular sponge membrane;
a double-sided adhesive sticking mechanism that sticks one piece of double-sided adhesive at each of two ends of the rectangular sponge membrane; and
a sponge membrane smoothing and pressing mechanism that sticks the double-sided adhesive on the roving.

The sponge membrane automatic winding apparatus further includes an overall apparatus frame, where the sponge membrane feeding mechanism, the double-sided adhesive sticking mechanism and the sponge membrane smoothing and pressing mechanism are arranged on the overall apparatus frame respectively.

In some embodiments, the sponge membrane feeding mechanism is configured to transfer the cut rectangular sponge membrane. The sponge membrane feeding mechanism is provided with a transfer panel and a temporary storage panel sequentially from an incoming direction. Sponge membrane clamping jaws are arranged above the temporary storage panel. Panel slide seats for controlling movement of the transfer panel are arranged below two short edges of the transfer panel. A pair of rectangular ports are formed in a middle of the transfer panel. Each of the pair of rectangular ports is provided with a vacuum suction plate. Surfaces of the vacuum suction plates are flush with a surface of the transfer panel. A suction plate slide seat is arranged below the vacuum suction plates. Small holes connected with a compressed air are uniformly distributed on a panel of the vacuum suction plate. The rectangular sponge membrane is tightly sucked under an action of the compressed air. A vacuum slide base moves the vacuum suction plate through an air cylinder, thereby moving the rectangular sponge membrane for a distance, and then the rectangular sponge membrane is able to be clamped by the sponge membrane clamping jaws.

In some embodiments, pressure fingers are arranged on the two short edges of the transfer panel for pressing the rectangular sponge membrane. The pressure fingers include inner pressure fingers and outer pressure fingers. Middle spaces between the inner pressure fingers and the outer pressure fingers are middle grooves. The middle grooves are working areas of the double-sided adhesive sticking mechanism and provide working spaces for an action of the double-sided adhesive sticking mechanism. The sponge membrane clamping jaws are configured to clamp and transfer the rectangular sponge membrane. Clamping jaw slide seats moving vertically are arranged at roots of the sponge membrane clamping jaws. The clamping jaw slide seats are arranged on feeding slide seats.

In some embodiments, bending limits are arranged on two sides of the transfer panel, to avoid dislocation of the sponge membrane.

In some embodiments, a pair of double-sided adhesive sticking mechanisms are arranged above the sponge membrane feeding mechanism, symmetrically arranged along a center line of long edges of the rectangular sponge membrane, and configured for sticking one piece of double-sided adhesive at each of the two ends of the rectangular sponge membrane separately. Each of the pair of double-sided adhesive sticking mechanism includes: an adhesive sticking slide seat fixed to the overall apparatus frame, where the adhesive sticking slide seat is provided with an adhesive sticking cylinder moving vertically, the adhesive sticking cylinder is connected with a mounting plate, and the mounting plate is provided with a double-sided adhesive traction wheel for actively pulling the double-sided adhesive;
a double-sided adhesive mounting wheel configured to fixedly mount the double-sided adhesive, where a guide wheel is arranged below the double-sided adhesive mounting wheel, an adhesive breaking mechanism is arranged below the guide wheel, the adhesive breaking mechanism cuts a double-sided adhesive tape through cutting and withdrawing of a blade without damaging a release paper, a shaft of an adhesive sticking roller is fixed below the adhesive breaking mechanism, the shaft is sleeved with a rotatable adhesive sticking roller, and the adhesive sticking roller is configured to press the double-sided adhesive tape and the sponge membrane tightly; and
a tension wheel located between the double-sided adhesive traction wheel and the adhesive sticking roller for guaranteeing that the double-sided adhesive is in a tension state.

In some embodiments, the double-sided adhesive sticking mechanism further includes a hot air blowing device arranged on the overall apparatus frame.

The sponge membrane smoothing and pressing mechanism includes a roving storage base and pressing mechanisms located on two sides of the storage base. Each pressing mechanism includes a sponge membrane pressing roller, a roller shaft rocker arm, an edge pressing roller and a roller shaft rocker arm slide seat. The edge pressing roller includes a roller with a central axis in a feeding direction of the rectangular sponge membrane. The roller is arranged on the overall apparatus frame through a lifting structure. The roller shaft rocker arm slide seat is arranged on the overall apparatus frame through a slide seat structure, and forms a crank rocker mechanism together with the roller shaft rocker arm and a rocker arm cylinder. The sponge membrane pressing roller is located at a tail end of the roller shaft rocker arm and moves along with swinging of the roller shaft rocker arm.

In some embodiments, the roving storage base has a structure with a lower middle and higher two sides. Two inclined planes are provided with cushion blocks made of nylon so as to facilitate storage of a roving.

Infrared sensors are arranged above the roving storage base, the transfer panel and the temporary storage panel of the sponge membrane smoothing and pressing mechanism respectively, to detect whether an object is located above the roving storage base, the transfer panel or the temporary storage panel.

A roving transfer mechanism is arranged on a top beam of the overall apparatus frame. The roving transfer mechanism is provided with slide brackets in a sliding manner above the beam. Two slide brackets are provided. Each of the two slide brackets is provided with a slide arm in a sliding manner vertically. Yarn holding jaws are arranged at a bottom of the slide arm. The slide brackets and slide arms are able to move under drive of a drive mechanism. The roving holding jaws are able to move in two directions of transverse direction and longitudinal direction. The roving holding jaws are able to transfer a roving between three stations. A front roving holding jaws are able to grab a columnar fiber roving from a protective film winding station to the sponge membrane smoothing and pressing mechanism. A rear roving holding jaws are able to grab a wound roving to a discharge station.

In some embodiments, the sponge membrane automatic winding apparatus further includes a sponge membrane supporting mechanism. The sponge membrane supporting mechanism is fixed on a ground by a supporting base. A cantilever shaft is mounted on a top of the supporting base by a bearing structure. The cantilever shaft is rotatable. The cantilever shaft is an air shaft structure, so as to wind and unwind a whole roll of sponge membrane. A root and an outer end of the cantilever shaft are respectively provided with a limiting plate and a limiting ring. A surface of the limiting plate facing the supporting base is provided with a hoop so as to limit a position of the limiting plate 13 on the side. The limiting ring is fixed at a tail end of the cantilever shaft by a turnbuckle, to adapt to rolled sponge membranes with different widths. A top of the supporting base is further provided with a bearing seat of the cantilever shaft. A safety shield is arranged on an outer side of the bearing seat in order to avoid mechanical damage.

In the other aspect, the present invention provides a packaging method. The packaging method includes:
step 1, making an infrared sensor of a roving storage base of a sponge membrane smoothing and pressing mechanism sense whether a sponge membrane is arranged above the roving storage base; and sending a sponge membrane demand request in a case that the infrared sensor senses no sponge membrane;
step 2, making a sponge membrane feeding mechanism move to a waiting station behind a sponge membrane cutting machine, and supplying, by the sponge membrane cutting machine, a cut rectangular sponge membrane, where
the sponge membrane moves forwards under a rotation of a feeding roller of the sponge membrane cutting machine, and a cantilever shaft of a sponge membrane supporting mechanism and a rolled sponge membrane rotate under a traction of a force; in a case that a sponge membrane discharge length reaches a set distance of the sponge membrane cutting machine, the feeding roller stops rotating, and a cutter moves to cut out the rectangular sponge membrane; and
the rectangular sponge membrane falls onto a transfer panel, a vacuum suction plate sucks the rectangular sponge membrane and moves for a distance towards a sponge membrane winding station under a drive of a suction plate slide seat, and after in place, pressure fingers move downwards to press the rectangular sponge membrane, and the vacuum suction plate stops sucking and is reset;
step 3, driving a main executive member of a double-sided adhesive sticking mechanism by an adhesive sticking slide seat to move towards the rectangular sponge membrane, where a hot air blowing device preheats an adhesive tape according to an opening condition, after the adhesive sticking slide seat is in place, an adhesive sticking cylinder acts, a mounting plate moves downwards until an adhesive sticking roller presses the rectangular sponge membrane, then the adhesive sticking slide seat moves in a reverse direction, a double-sided adhesive traction wheel rotates simultaneously, a double-sided adhesive is separated from a release paper under a combining viscosity action with the sponge membrane and a pressure of the adhesive sticking roller, after the adhesive sticking slide seat moves for half a distance, a blade of an adhesive breaking mechanism acts to cut off the adhesive tape without damaging the release paper, the adhesive sticking slide seat and the double-sided adhesive traction wheel continue to act until the double-sided adhesive tape is completely stuck to a surface of the rectangular sponge membrane, and the adhesive sticking cylinder and the adhesive sticking slide seat are reset; then driving the transfer panel by a panel slide seat to move towards the sponge membrane winding station until the transfer panel approaches a temporary storage panel, making sponge membrane clamping jaws of the feeding mechanism open, move towards the sponge membrane, close to clamp long edges of the rectangular sponge membrane after being in place, and move in a reverse direction to transfer the rectangular sponge membrane to a position above the roving storage base, and in this case, pressing two short edges of the rectangular sponge membrane by sponge membrane pressing rollers;
during transfer by the sponge membrane clamping jaws of the feeding mechanism, since no material is located on the temporary storage panel and the transfer panel is in a waiting state, sending a material demand request to the sponge membrane cutting machine until the sponge membrane clamping jaws of the feeding mechanism transfer a new rectangular sponge membrane to the temporary storage panel; and
in a case that rectangular sponge membranes are detected on the roving storage base and the temporary storage panel, sending, by the transfer panel, a demand request to the sponge membrane cutting machine, that is, stopping cutting the sponge membrane in a case of satisfying three conditions that rectangular sponge membranes are detected on the roving storage base, the temporary storage panel and the transfer panel;
step 4, in a case that the sponge membrane is detected on the roving storage base, grabbing, by the roving transfer mechanism, a columnar fiber roving from the protective film winding station to the roving storage base of the sponge membrane smoothing and pressing mechanism under transverse movement of a slide bracket, longitudinal movement of a slide arm and clamping of roving holding jaws, then loosening the sponge membrane pressing rollers, sinking the roving storage base under an action of a base slide seat, moving a rocker arm slide seat on a side towards a roving position, and rotating a roller shaft rocker arm upwards under an extending action of a rocker arm cylinder, such that the sponge membrane pressing rollers make contact with the sponge membrane and roll on a side surface of the roving by the roller shaft rocker arm until rolling to a top of the roving, in this case, sticking the adhesive tape on an upper side surface of the roving, then resetting the sponge membrane pressing rollers, and then sticking a double-sided adhesive tape of the other surface by a same action; and
then, grabbing, by the roving transfer mechanism, a wound roving to a discharge station under the transverse movement of the slide bracket, the longitudinal movement of the slide arm and the clamping of the roving holding jaws. Sponge membrane winding action is finished.

Compared with the prior art, the present invention has the following beneficial effects:
1. The present invention provides a sponge membrane automatic winding apparatus for a columnar fiber roving product. The apparatus is able to implement automatic supplementing, sticking, feeding, wrapping, pressing, etc. of a sponge membrane. This helps reduce workload, lower procurement cost of the sponge membrane, and increase corporate income.
2. Traditional sponge membranes require double-sided adhesive peeling and sponge membrane wrapping. Unlike this, the present invention no longer uses a finished sponge membrane, but uses a whole roll of sponge membrane. According to product requirements, the sponge membrane is cut and supplemented as needed, transferred to an adhesive sticking position to stick double-sided adhesive, and then transferred to a sponge membrane wrapping position. After a product is in place, the roller on one side smooths the sponge membrane and presses the double-sided adhesive position, and then returns at the end. Then the roller on the other side smooths the sponge membrane on the other end and presses the double-sided adhesive position, and then returns at the end. A new idea is provided for the field of sponge membrane packaging.

### Brief Description of the Drawings

The accompanying drawings of the specification forming a part of the present invention serve to provide a In some embodiments understanding of the present invention, and the illustrative examples of the present invention and the description of the illustrative examples serve to explain the present invention and are not to be construed as unduly limiting the present invention.
Fig. 1 is a diagram of an overall structure of an apparatus;
Fig. 2 is a schematic diagram of a rolled sponge membrane supporting mechanism;
Fig. 3 is a schematic diagram of a sponge membrane cutting machine;
Fig. 4 is a schematic diagram of a sponge membrane feeding mechanism;
Fig. 5 is a schematic diagram of a double-sided adhesive sticking mechanism;
Fig. 6 is a schematic diagram of a sponge membrane smoothing and pressing mechanism;
Fig. 7 is a schematic diagram of a roving transfer mechanism; and
Fig. 8 is a sectional view of a sponge membrane wound around a columnar fiber roving product.

In the figures, 1-rolled sponge membrane supporting mechanism, 2-rolled sponge membrane, 3-sponge membrane cutting machine, 4-double-sided adhesive sticking mechanism, 5-sponge membrane feeding mechanism, 6-sponge membrane smoothing and pressing mechanism, 7-roving transfer mechanism, 8-roving, and 9-overall apparatus frame;
11-supporting base, 12-cantilever shaft, 13-limiting plate, 14-limiting ring, and 15-safety shield; 121-expansion block;
31-tension roller, 32-feeding roller, 33-cutter, 34-control box, and 35-bottom support;
21-rectangular sponge membrane; 211-double-sided adhesive tape;
41-adhesive sticking slide seat, 42-adhesive sticking cylinder, 43-mounting plate, and 44-hot air blowing device; 431-double-sided adhesive traction wheel, 432-tension wheel, 433-adhesive sticking roller, 434-guide wheel, 435-adhesive breaking mechanism, and 436-double-sided adhesive mounting wheel;
51-transfer panel, 52-pressure finger, 53-temporary storage panel, and 54-sponge membrane clamping jaw; 511-panel slide seat, 512-rectangular port, 513-vacuum suction plate, 514-suction plate slide seat, and 515-bending limit; 541-clamping jaw slide seat, and 542-feeding slide seat;
61-roving storage base, 62-sponge membrane pressing roller, 63-roller shaft rocker arm, 64-edge pressing roller, 65-rocker arm slide base;611-cushion block, and 612-base slide seat; 631-rocker arm cylinder; and
71-slide bracket, 71-slide arm, and 73-roving holding jaw.

### Detailed Description of the Embodiments

It should be noted that the following detailed description is illustrative and is intended to provide further explanation of the present invention. Unless otherwise defined, all technical and scientific terms used herein have the same meanings usually understood by the general technical personnel in the technical field of the present invention.

It should be noted that the terms used herein are for the purpose of describing detailed embodiments merely and are not intended to limit the illustrative embodiments in accordance with the present invention. As used herein, the singular form is also intended to include the plural form unless clearly indicated otherwise in the context. Moreover, it should also be understood that the terms "comprise" and/or "include", when used in the description, specify the presence of features, steps, operations, devices, assemblies, and/or their combinations.

A columnar fiber in the present invention includes a columnar fiber product such as a glass fiber, a carbon fiber, and a basalt fiber.

A slide seat is generally a linear slide seat, which is a common structure in the mechanical field. The linear slide seat reciprocates under action of its driving structure to drive other assemblies connected to it to move.

A sponge membrane is a purchased finished product. The sponge membrane is a rectangular membrane with a fixed size, and two ends of one side are provided with double-sided adhesive. A width, a thickness and a length of the sponge membrane used for different products are different, and versatility is low.

At present, sponge membrane wrapping is manually operated. Station working mainly includes double-sided adhesive stripping, sponge membrane wrapping and label sticking.

To sum up, a sponge membrane automatic winding apparatus for a columnar fiber roving product needs to satisfy requirements of double-sided adhesive stripping for a sponge membrane and automatic wrapping and winding for a sponge membrane. In order to facilitate an entire process, existing packaging processes are rearranged. No finished sponge membrane is used, but a whole roll of sponge membrane is used. According to product requirements, the sponge membrane is cut and supplemented as needed, transferred to an adhesive sticking position to stick double-sided adhesive, and then transferred to a sponge membrane wrapping position. After a product is in place, the roller on one side smooths the sponge membrane and presses the double-sided adhesive position, and then returns at the end. Then the roller on the other side smooths the sponge membrane on the other end and presses the double-sided adhesive position, and then returns at the end. Accordingly, sponge membrane wrapping is completed, and the product is moved to a next station.

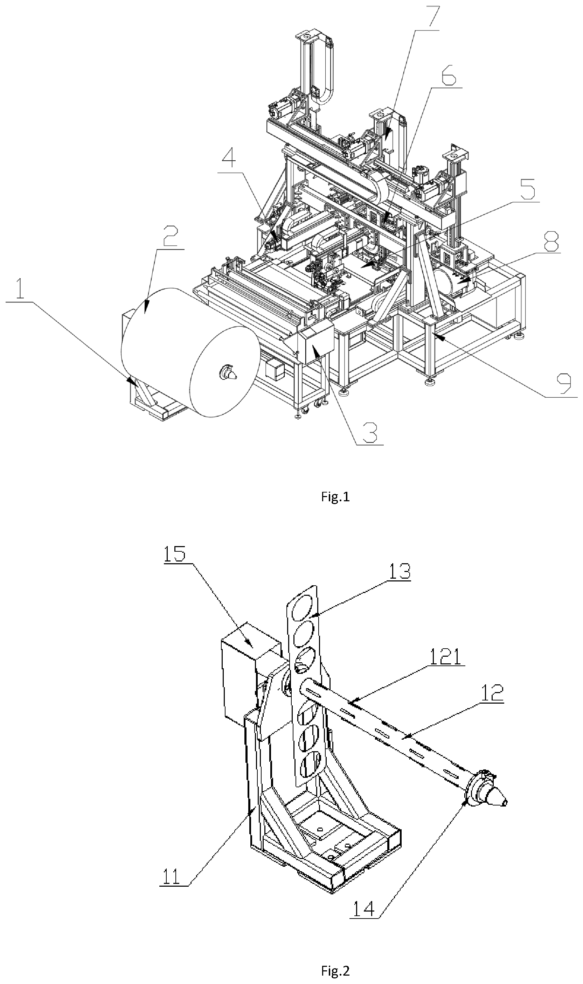

In the example, glass fiber direct roving is taken as an instance to introduce a workflow of the sponge membrane automatic winding apparatus for a columnar fiber roving product. As shown in Fig. 1, main working parts include a rolled sponge membrane supporting mechanism 1, a sponge membrane cutting machine 3, a double-sided adhesive sticking mechanism 4, a sponge membrane feeding mechanism 5, a sponge membrane smoothing and pressing mechanism 6, a roving transfer mechanism 7, and an overall apparatus frame 9.

The rolled sponge membrane supporting mechanism 1, the sponge membrane cutting machine 3 and the overall apparatus frame 9 are directly and sequentially fixed on the ground. The double-sided adhesive sticking mechanism 4, the sponge membrane feeding mechanism 5, the sponge membrane smoothing and pressing mechanism 6 and the roving transfer mechanism 7 are all arranged at different positions of the overall apparatus frame 9.

As shown in Fig. 2, the sponge membrane supporting mechanism 1 is fixed on the ground by a supporting base 11. A cantilever shaft 12 is mounted on a top of the supporting base 11 by a bearing structure. The cantilever shaft 12 is rotatable. A paper tube is arranged in a center of a rolled sponge membrane 2. An inner diameter of the paper tube is aligned with an outer diameter of the cantilever shaft 12 for sleeving when in use. A plurality of expansion blocks 121 are distributed on a cylindrical surface of the cantilever shaft 12. The expansion blocks 121 are able to expand to tighten the paper tube at the center of the rolled sponge membrane. The expansion blocks 121 act through compressed air. When the compressed air is not introduced, working surfaces of the expansion blocks 121 are flush with a surface of the cantilever shaft 12. When the compressed air is introduced, the expansion blocks 121 are jacked up and expand to tighten the paper tube at the center of the sponge membrane. In the example, an air shaft structure with expansion blocks is adopted, for example, a structure provided in the published patent "Air Shaft Expansion Block" (Publication No. CN211366590U). A root and an outer end of the cantilever shaft 12 are respectively provided with a limiting plate 13 and a limiting ring 14. A surface of the limiting plate 13 facing the supporting base 11 is provided with a hoop so as to limit a position of the limiting plate 13 on the side. The limiting ring 14 is fixed at a tail end of the cantilever shaft 12 by a turnbuckle. When a roll diameter of the product changes, a width of a required sponge membrane decreases, such that positions of the limiting plate 13 and the limiting ring 14 on the cantilever shaft 12 are able to be moved by loosening the hoop of the limiting plate 13 and the turnbuckle of the limiting ring 14, so as to adapt to rolled sponge membranes with different widths. By adjusting the positions of the limiting plate 13 and the limiting ring 14, a center line of long edges of the sponge membrane is maintained at a fixed position when the width and length of the sponge membrane are changed. The top of the supporting base 11 is further provided with a bearing seat of the cantilever shaft 12. A safety shield 15 is arranged on an outer side of the bearing seat in order to avoid mechanical damage.

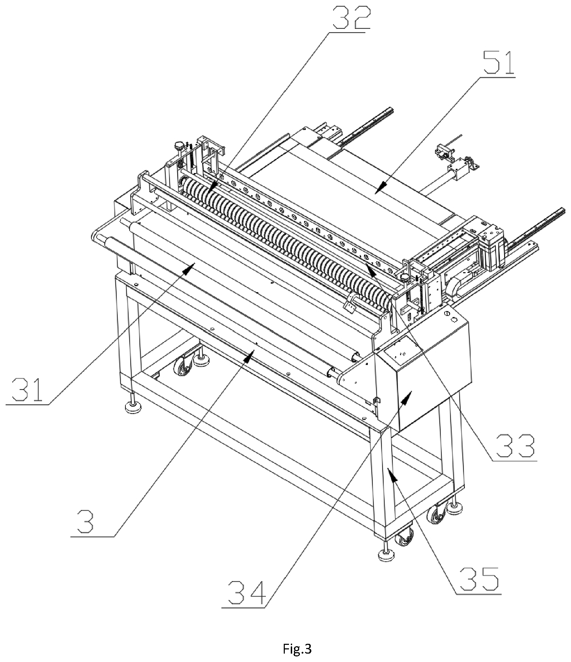

As shown in Fig. 3, the sponge membrane cutting machine 3 includes a plurality of tension rollers 31, a pair of feeding rollers 32, a cutter 33, a control box 34 and a bottom support 35. The plurality of tension rollers 31, the pair of feeding rollers 32 and the cutter 33 are sequentially arranged above the bottom support 35. The rolled sponge membrane 2 enters the feeding rollers 32 through the tension rollers 31 and is cut into a rectangular sponge membrane 21 by the cutter 33. A controller is mounted in the control box 34 to control cutter movement for membrane cutting. A common structure of a membrane cutting mechanism in the mechanical field is used, and connection and control relationships of the cutter do not need to be described in detail.

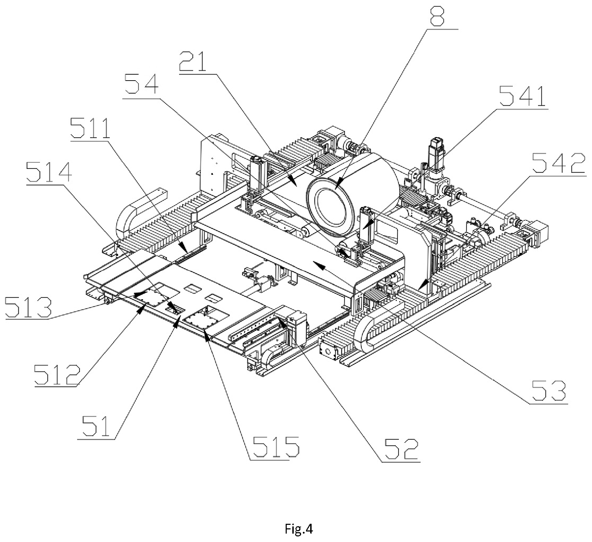

The sponge membrane feeding mechanism 5 is mainly configured to transfer the cut rectangular sponge membrane 21. As shown in Fig. 3 and Fig. 4, the sponge membrane feeding mechanism 5 is provided with a transfer panel 51 (located below the rectangular sponge membrane 21) and a temporary storage panel 53 sequentially arranged along an incoming direction. Sponge membrane clamping jaws 54 are arranged above the temporary storage panel 53. A transfer position 1 is at the transfer panel 51. A transfer position 2 is at the temporary storage panel 53. A panel slide seat 511 for controlling the transfer panel 51 to move is arranged below two short edges of the transfer panel 51. A pair of rectangular ports 512 are formed in a middle of the transfer panel 51. Each of the pair of rectangular ports is provided with a vacuum suction plate 513. Surfaces of the vacuum suction plates 513 are flush with a surface of the transfer panel 51. A suction plate slide seat 514 is arranged below the vacuum suction plate 513. Small holes connected to compressed air are uniformly distributed on a panel of the vacuum suction plate 513. The rectangular sponge membrane is tightly sucked under an action of the compressed air. The vacuum slide seat 514 moves the vacuum suction plates by an air cylinder. The vacuum suction plates move to drive the rectangular sponge membrane to move for a short distance, such that the rectangular sponge membrane is able to be gripped by the sponge membrane clamping jaws 54 (the sponge membrane clamping jaws 54 operate at transfer position 2).

Pressure fingers 52 are arranged on the two short edges of the transfer panel 51 for pressing the rectangular sponge membrane 21. The pressure fingers 52 include inner pressure fingers and outer pressure fingers. Middle spaces between the inner pressure fingers and the outer pressure fingers are middle grooves. The middle grooves are working areas of the double-sided adhesive sticking mechanism and provide working spaces for an action of the double-sided adhesive sticking mechanism 4. The pressure fingers on two sides are configured to press the rectangular sponge membrane without moving or pleating. The temporary storage panel 53 is configured for temporary storage of the rectangular sponge membrane 21 to shorten a working cycle. The sponge membrane clamping jaws 54 are configured to clamp and transfer the rectangular sponge membrane 21. Clamping jaw slide seats 541 moving vertically are arranged at roots of the sponge membrane clamping jaws 54. The clamping jaw slide seats 541 are arranged on feeding slide seats 542. The feeding slide seats 542 are arranged on two sides of the temporary storage panel 53 and are able to reciprocate in a production line direction.

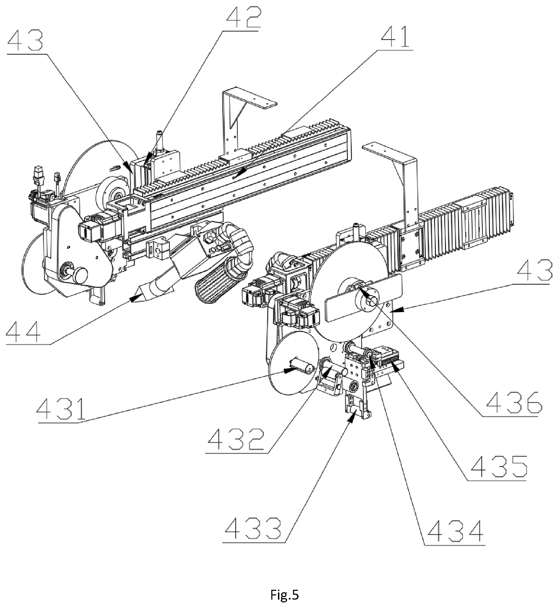

One piece of double-sided adhesive needs to be stuck at each of two ends of the rectangular sponge membrane 21. The double-sided adhesive sticking mechanism 4 completes this action. As shown in Fig. 1 and Fig. 5, one pair of double-sided adhesive sticking mechanism 4 is provided in total, symmetrically arranged respective to the center line of the long edges of the rectangular sponge membrane, and arranged above the sponge membrane feeding mechanism 5. The double-sided adhesive sticking mechanism includes an adhesive sticking slide seat 41 fixed to the overall apparatus frame 9, an adhesive sticking cylinder 42 and a mounting plate 43 arranged on the adhesive sticking slide seat 41, and a hot air blowing device 44 arranged on the overall apparatus frame 9.

Since the adhesive sticking slide seat 41 is arranged on a cantilever extending from the overall apparatus frame 9, forward and backward movement in the feeding direction is able to be implemented. The position is above short edge ends of the rectangular sponge membrane 21. The hot air blowing device 44 is also arranged on the cantilever extending from the overall apparatus frame 9, such that a normal use of the double-sided adhesive in winter is able to be guaranteed. The adhesive sticking slide seat 41 is provided with an adhesive sticking cylinder 42 moving vertically. The adhesive sticking cylinder 42 is connected with a mounting plate 43. Core action parts of the double-sided adhesive sticking mechanism 4 are arranged on the mounting plate 43. The mounting plate 43 is provided with a double-sided adhesive traction wheel 431, a tension wheel 432, an adhesive sticking roller 433, a guide wheel 434, an adhesive breaking mechanism 435, and a double-sided adhesive mounting wheel 436. The double-sided adhesive mounting wheel 436 is configured to fixedly mount the double-sided adhesive. The guide wheel 434 is arranged below the double-sided adhesive mounting wheel 436. The adhesive breaking mechanism 435 is arranged below the guide wheel 434. The adhesive breaking mechanism 435 cuts the double-sided adhesive tape through cutting and withdrawing of a blade without damaging a release paper. A shaft of the adhesive sticking roller 433 is fixed below the adhesive breaking mechanism 435. The shaft is sleeved with a rotatable adhesive sticking roller 433. The adhesive sticking roller 433 is configured to press the adhesive and the sponge membrane tightly. The double-sided adhesive traction wheel 431 is configured to actively pull the double-sided adhesive. The tension wheel 432 is configured to guarantee that the double-sided adhesive is in a tension state.

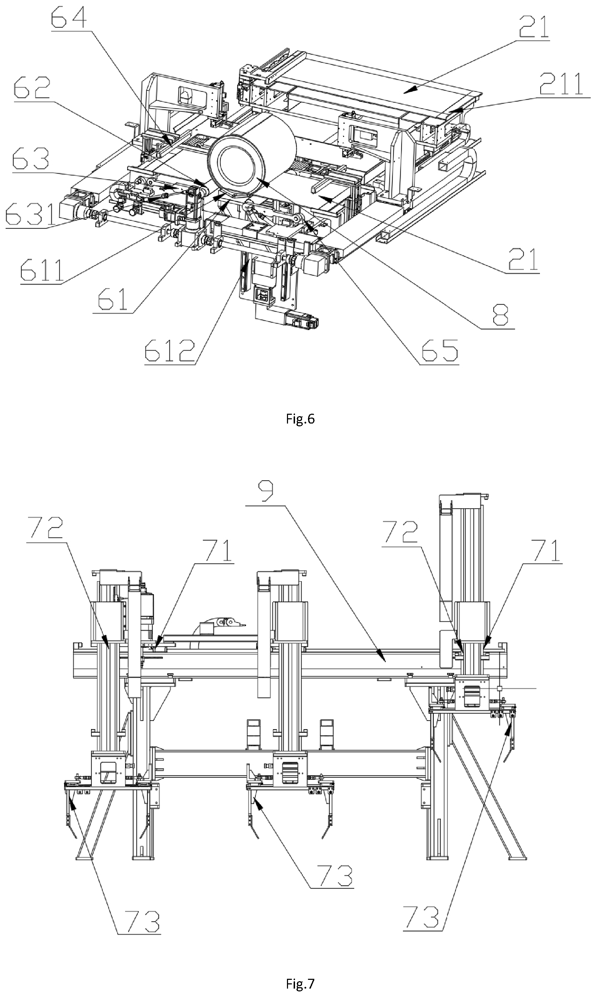

The roving transfer mechanism 7 is arranged on a top beam of the overall apparatus frame 9. As shown in Fig. 7, the roving transfer mechanism 7 is provided with slide brackets 71 in a sliding manner above the beam. Two slide brackets 71 are provided. Each slide bracket 71 is provided with a slide arm 72 slidably arranged in a vertical direction. Yarn holding jaws 73 are arranged at bottoms of the slide arms 72. The slide brackets 71 and the slide arms 72 are able to move under drive of a drive mechanism. The drive mechanism is able to be a chain wheel chain, a gear rack, a screw rod, an air cylinder, or a hydraulic cylinder. The roving holding jaws 73 are able to move in two directions of transverse direction and longitudinal direction. The roving holding jaws 73 are able to transfer a roving 8 between 3 stations. The front roving holding jaws are able to grab a columnar fiber roving from the protective film winding station to the sponge membrane smoothing and pressing mechanism. The rear roving holding jaws are able to grab a wound roving to a discharge station.

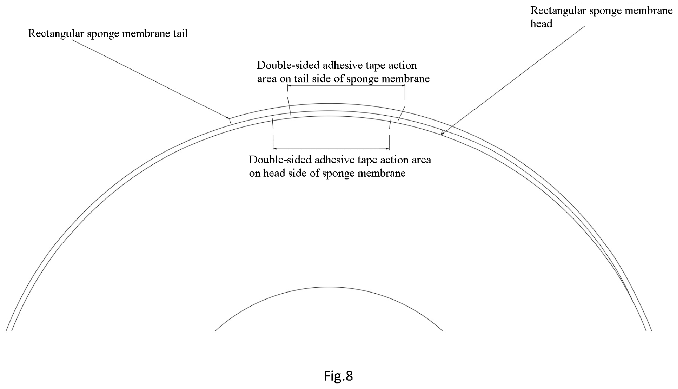

As shown in Fig. 6, the sponge membrane smoothing and pressing mechanism 6 includes a roving storage base 61 and pressing mechanisms located on two sides of the storage base 61. Each pressing mechanism includes a sponge membrane pressing roller 62, a roller shaft rocker arm 63, an edge pressing roller 64 and a roller shaft rocker arm slide seat 65. The edge pressing roller 64 includes a roller with a central axis in a feeding direction of the rectangular sponge membrane 21. The roller is arranged on the overall apparatus frame 9 through a lifting structure. The roller shaft rocker arm slide seat 65 is arranged on the overall apparatus frame 9 through a slide seat structure, and forms a crank rocker mechanism together with the roller shaft rocker arm 63 and a rocker arm cylinder 631. The sponge membrane pressing roller 62 is located at a tail end of the roller shaft rocker arm 63 and moves along with swinging of the roller shaft rocker arm 63. The roving storage base 61 provides a station for sponge membrane winding. First, the sponge membrane feeding mechanism 5 moves the rectangular sponge membrane 21 to the roving storage base 61, and the roving transfer mechanism 7 also moves the roving 8 to a space above the roving storage base 61 and places the roving on the rectangular sponge membrane 21. A base slide seat 612 is arranged below the roving storage base 61 in a sliding manner. The edge pressing roller 64 may press two ends of the rectangular sponge membrane 21 moved to the roving storage base 61, and release the rectangular sponge membrane after the roving 8 presses the rectangular sponge membrane 21. Then the roving storage base 61 sinks under sliding drive of the base slide seat 612. The roller shaft rocker arm slide seat 65 on one side moves towards a roving position. The roller shaft rocker arm 63 rotates upwards under an extending action of the rocker arm cylinder 631. The sponge membrane pressing roller 62 makes contact with the rectangular sponge membrane 21 and rolls on a side surface of the roving 8 by the roller shaft rocker arm 63 until rolling to a top of the roving 8. In this case, the double-sided adhesive tape 211 is stuck on an upper side surface of the roving 8. The sponge membrane pressing roller is reset. Then the roller shaft rocker arm 63 on the other side sticks double-sided adhesive of the other surface by a same action. As shown in Fig. 8, double-sided adhesive tapes on a head side and a tail side of the sponge membrane partially overlap, so as to pack the roving product in the sponge membrane.

Infrared sensors are arranged above the roving storage base 61, the transfer panel 51 and the temporary storage panel 53 of the sponge membrane smoothing and pressing mechanism 6 respectively, to detect whether an object is located above the roving storage base, the transfer panel or the temporary storage panel.

A controller is further included. The controller is connected with the infrared sensors arranged above the roving storage base, the transfer panel and the temporary storage panel by signals respectively, is connected with action mechanisms of the rolled sponge membrane supporting mechanism 1, the sponge membrane cutting machine 3, the double-sided adhesive sticking mechanism 4, the sponge membrane feeding mechanism 5, the sponge membrane smoothing and pressing mechanism 6 and the roving transfer mechanism 7 by signals respectively, receives signals from the infrared sensors, and controls action of the action mechanisms.

For a product that requires sponge membrane wrapping, after a process begins, the roving storage base 61 of the sponge membrane smoothing and pressing mechanism 6 senses whether a sponge membrane 21 is arranged above it. A sponge membrane demand request is sent in a case that the roving storage base senses no sponge membrane. The sponge membrane feeding mechanism 5 moves to a waiting station behind the sponge membrane cutting machine 3. The sponge membrane moves forwards under rotation of the feeding roller 32 of the sponge membrane cutting machine 3. The cantilever shaft 12 of the sponge membrane supporting mechanism 1 and the rolled sponge membrane 2 rotate under traction of a force. In a case that a sponge membrane discharge length reaches a set distance of the sponge membrane cutting machine 3, the feeding roller 32 stops rotating, and the cutter 33 moves to cut out the rectangular sponge membrane 21. The rectangular sponge membrane 21 cut out by the sponge membrane cutting machine 3 falls onto the transfer panel 51. The vacuum suction plate 513 sucks the rectangular sponge membrane 21 and moves by a small distance towards a sponge membrane winding station under drive of the suction plate slide seat 514. After in place, the pressure fingers 52 move downwards to press the rectangular sponge membrane 21. The vacuum suction plate 513 stops sucking and resets. A main executive member of a double-sided adhesive sticking mechanism 4 is driven by the adhesive sticking slide seat 41 to move towards the rectangular sponge membrane 21. During this process, a hot air blowing device 44 preheats an adhesive tape according to an opening condition. After the adhesive sticking slide seat 41 is in place, the adhesive sticking cylinder 42 acts. The mounting plate 43 moves downwards until the adhesive sticking roller 433 presses the rectangular sponge membrane 21. Then the adhesive sticking slide seat 41 moves in a reverse direction. The double-sided adhesive traction wheel 431 rotates simultaneously. Double-sided adhesive is separated from the release paper under a combining viscosity action with the sponge membrane and a pressure of the adhesive sticking roller 433. After the adhesive sticking slide seat moves for half a distance, a blade of an adhesive breaking mechanism 435 acts to cut off the adhesive tap without damaging the release paper. The adhesive sticking slide seat 41 and the double-sided adhesive traction wheel 431 continue to act until the double-sided adhesive tape 211 is completely stuck to a surface of the rectangular sponge membrane 21. The adhesive sticking cylinder 42 and the adhesive sticking slide seat 41 are reset. Then the transfer panel 51 is driven by the panel slide seat 511 to move towards the sponge membrane winding station until the transfer panel approaches the temporary storage panel 53. The sponge membrane clamping jaws 54 of the feeding mechanism 5 open, move towards the sponge membrane, close to clamp long edges of the rectangular sponge membrane 21 after being in place, and move in a reverse direction to transfer the rectangular sponge membrane 21 to a position above the roving storage base 61. In this case, two short edges of the rectangular sponge membrane 21 are pressed by the sponge membrane pressing rollers 62. During transfer by the sponge membrane clamping jaws 54 of the feeding mechanism 5, since no material is located on the temporary storage panel 53 and the transfer panel 51 is in a waiting state, a material demand request is sent to the sponge membrane cutting machine 3 until the sponge membrane clamping jaws 54 of the feeding mechanism 5 transfer a new rectangular sponge membrane 21 to the temporary storage panel 53. In a case that rectangular sponge membranes 21 are detected on the roving storage base 61 and the temporary storage panel 53, the transfer panel 51 sends a demand request to the sponge membrane cutting machine 3, that is, cutting the sponge membrane is stopped in a case of satisfying three conditions that rectangular sponge membranes 21 are detected on the roving storage base 61, the temporary storage panel 53 and the transfer panel 51. In a case that a sponge membrane is detected on the roving storage base 61, the roving transfer mechanism 7 grabs a columnar fiber roving from a protective film winding station to the roving storage base 61 of the sponge membrane smoothing and pressing mechanism 6 under transverse movement of the slide bracket 71, longitudinal movement of the slide arm 72 and clamping of the roving holding jaws 73. Then the sponge membrane pressing rollers 62 are loosened. The roving storage base 61 sinks under action of the base slide seat 612. The rocker arm slide seat 65 on one side moves towards a roving position. The roller shaft rocker arm 63 rotates upwards under the extending action of the rocker arm cylinder 631. The sponge membrane pressing roller 62 makes contact with the sponge membrane 21 and rolls on a side surface of the roving 8 by the roller shaft rocker arm 63 until rolling to a top of the roving 8. In this case, the adhesive tape 211 is stuck on an upper side surface of the roving 8. The sponge membrane pressing roller is reset. Then a double-sided adhesive tape of the other surface is stuck by the same action. After completion, the roving transfer mechanism 7 grabs the wound roving to a discharge station under the transverse movement of the slide bracket 71, the longitudinal movement of the slide arm 72 and the clamping of the roving holding jaws 73. Sponge membrane winding action is finished.

In some embodiments, as shown in Fig. 4, bending limits 515 are arranged on two sides of the transfer panel 51, to avoid dislocation of the sponge membrane.

In some embodiments, the roving storage base 61 has a structure with a lower middle and higher two sides. Two inclined planes are provided with cushion blocks 611 made of nylon so as to facilitate storage of a roving.

The foregoing is merely some examples of the present invention and is not intended to be limiting of the present invention. Various changes and modifications may be made by those skilled in the art. Any modifications, equivalent substitutions, improvements, etc. made within the spirit and scope of the present invention should be included within the protection scope of the present invention.

## Claims

1. A sponge membrane automatic winding apparatus for a columnar fiber roving product, comprising:
a sponge membrane supply mechanism, wherein the sponge membrane supply mechanism comprises a sponge membrane cutting machine and a sponge membrane feeding mechanism that are respectively configured to cut a whole roll of sponge membrane to obtain a rectangular sponge membrane and transfer the rectangular sponge membrane;
a double-sided adhesive sticking mechanism that sticks one piece of double-sided adhesive at each of two ends of the rectangular sponge membrane; and
a sponge membrane smoothing and pressing mechanism that sticks the double-sided adhesive on a roving; and
further comprising an overall apparatus frame, wherein the sponge membrane feeding mechanism, the double-sided adhesive sticking mechanism and the sponge membrane smoothing and pressing mechanism are arranged on the overall apparatus frame respectively.

2. The sponge membrane automatic winding apparatus according to claim 1, wherein the sponge membrane feeding mechanism is provided with a transfer panel, a temporary storage panel and sponge membrane clamping jaws sequentially arranged along an incoming direction; panel slide seats for controlling movement of the transfer panel are arranged below two short edges of the transfer panel; a pair of rectangular ports are formed in a middle of the transfer panel, each of the pair of rectangular ports is provided with a vacuum suction plate, surfaces of the vacuum suction plates are flush with a surface of the transfer panel, and a suction plate slide seat is arranged below the vacuum suction plate; and small holes connected to compressed air are uniformly distributed on a panel of the vacuum suction plate, and the rectangular sponge membrane is tightly sucked under an action of the compressed air.

3. The sponge membrane automatic winding apparatus according to claim 2, wherein pressure fingers are arranged on the two short edges of the transfer panel for pressing the rectangular sponge membrane, the pressure fingers comprise inner pressure fingers and outer pressure fingers, middle spaces between the inner pressure fingers and the outer pressure fingers are middle grooves, and the middle grooves are working areas of the double-sided adhesive sticking mechanism and provide working spaces for an action of the double-sided adhesive sticking mechanism; and the sponge membrane clamping jaws are configured to clamp and transfer the rectangular sponge membrane, clamping jaw slide seats moving vertically are arranged at roots of the sponge membrane clamping jaws, and the clamping jaw slide seats are arranged on feeding slide seats.

4. The sponge membrane automatic winding apparatus according to claim 2, wherein bending limits are arranged on two sides of the transfer panel, to avoid dislocation of the sponge membrane.

5. The sponge membrane automatic winding apparatus according to claim 2, wherein a pair of double-sided adhesive sticking mechanisms are arranged above the sponge membrane feeding mechanism, symmetrically arranged along a center line of long edges of the rectangular sponge membrane, and configured for sticking one piece of double-sided adhesive at each of the two ends of the rectangular sponge membrane, and each of the pair of double-sided adhesive sticking mechanism comprises: an adhesive sticking slide seat fixed to the overall apparatus frame, wherein the adhesive sticking slide seat is provided with an adhesive sticking cylinder moving vertically, the adhesive sticking cylinder is connected with a mounting plate, and the mounting plate is provided with a double-sided adhesive traction wheel for actively pulling the double-sided adhesive;
a double-sided adhesive mounting wheel configured to fixedly mount the double-sided adhesive, wherein a guide wheel is arranged below the double-sided adhesive mounting wheel, an adhesive breaking mechanism is arranged below the guide wheel, the adhesive breaking mechanism cuts a double-sided adhesive tape through cutting and withdrawing of a blade without damaging a release paper, a shaft of an adhesive sticking roller is fixed below the adhesive breaking mechanism, the shaft is sleeved with a rotatable adhesive sticking roller, and the adhesive sticking roller is configured to press the double-sided adhesive tape and the sponge membrane tightly;
a tension wheel located between the double-sided adhesive traction wheel and the adhesive sticking roller for guaranteeing that the double-sided adhesive is in a tension state; and
a hot air blowing device arranged on the overall apparatus frame.

6. The sponge membrane automatic winding apparatus according to claim 1, wherein the sponge membrane smoothing and pressing mechanism comprises a roving storage base and pressing mechanisms located on two sides of the storage base, and each pressing mechanism comprises a sponge membrane pressing roller, a roller shaft rocker arm, an edge pressing roller and a roller shaft rocker arm slide seat; the edge pressing roller comprises a roller with a central axis in a feeding direction of the rectangular sponge membrane, and the roller is arranged on the overall apparatus frame through a lifting structure; and the roller shaft rocker arm slide seat is arranged on the overall apparatus frame through a slide seat structure, and forms a crank rocker mechanism together with the roller shaft rocker arm and a rocker arm cylinder, and the sponge membrane pressing roller is located at a tail end of the roller shaft rocker arm and moves along with swinging of the roller shaft rocker arm.

7. The sponge membrane automatic winding apparatus according to claim 6, wherein infrared sensors are arranged above the roving storage base, the transfer panel and the temporary storage panel of the sponge membrane smoothing and pressing mechanism respectively, to detect whether an object is located above the roving storage base, the transfer panel or the temporary storage panel.

8. The sponge membrane automatic winding apparatus according to claim 1, wherein a roving transfer mechanism is arranged on a top beam of the overall apparatus frame, the roving transfer mechanism is provided with slide brackets in a sliding manner above the beam, two slide brackets are provided, each of the two slide brackets is provided with a slide arm in a sliding manner vertically, and roving holding jaws are arranged at a bottom of the slide arm.

9. The sponge membrane automatic winding apparatus according to claim 1, further comprising a sponge membrane supporting mechanism, wherein the sponge membrane supporting mechanism is fixed on a ground by a supporting base, a cantilever shaft is mounted on a top of the supporting base by a bearing structure, and the cantilever shaft is rotatable; and the cantilever shaft is an air shaft structure, so as to wind and unwind a whole roll of sponge membrane.

10. A packaging method, based on the sponge membrane automatic winding apparatus according to any one of claims 1 to 9, comprising:
step 1, making an infrared sensor of a roving storage base of a sponge membrane smoothing and pressing mechanism sense whether a sponge membrane is arranged above the roving storage base; and sending a sponge membrane demand request in a case that the infrared sensor senses no sponge membrane;
step 2, making a sponge membrane feeding mechanism move to a waiting station behind a sponge membrane cutting machine, and supplying, by the sponge membrane cutting machine, a cut rectangular sponge membrane, wherein
the sponge membrane moves forwards under a rotation of a feeding roller of the sponge membrane cutting machine, and a cantilever shaft of a sponge membrane supporting mechanism and a rolled sponge membrane rotate under a traction of a force; in a case that a sponge membrane discharge length reaches a set distance of the sponge membrane cutting machine, the feeding roller stops rotating, and a cutter moves to cut out the rectangular sponge membrane; and
the rectangular sponge membrane falls onto a transfer panel, a vacuum suction plate sucks the rectangular sponge membrane and moves for a distance towards a sponge membrane winding station under a drive of a suction plate slide seat, and after in place, pressure fingers move downwards to press the rectangular sponge membrane, and the vacuum suction plate stops sucking and is reset;
step 3, driving a main executive member of a double-sided adhesive sticking mechanism by an adhesive sticking slide seat to move towards the rectangular sponge membrane, wherein a hot air blowing device preheats an adhesive tape according to an opening condition, after the adhesive sticking slide seat is in place, an adhesive sticking cylinder acts, a mounting plate moves downwards until an adhesive sticking roller presses the rectangular sponge membrane, then the adhesive sticking slide seat moves in a reverse direction, a double-sided adhesive traction wheel rotates simultaneously, a double-sided adhesive is separated from a release paper under a combining viscosity action with the sponge membrane and a pressure of the adhesive sticking roller, after the adhesive sticking slide seat moves for half a distance, a blade of an adhesive breaking mechanism acts to cut off the adhesive tape without damaging the release paper, the adhesive sticking slide seat and the double-sided adhesive traction wheel continue to act until the double-sided adhesive tape is completely stuck to a surface of the rectangular sponge membrane, and the adhesive sticking cylinder and the adhesive sticking slide seat are reset; then driving the transfer panel by a panel slide seat to move towards the sponge membrane winding station until the transfer panel approaches a temporary storage panel, making sponge membrane clamping jaws of the feeding mechanism open, move towards the sponge membrane, close to clamp long edges of the rectangular sponge membrane after being in place, and move in a reverse direction to transfer the rectangular sponge membrane to a position above the roving storage base, and in this case, pressing two short edges of the rectangular sponge membrane by sponge membrane pressing rollers;
during transfer by the sponge membrane clamping jaws of the feeding mechanism, since no material is located on the temporary storage panel and the transfer panel is in a waiting state, sending a material demand request to the sponge membrane cutting machine until the sponge membrane clamping jaws of the feeding mechanism transfer a new rectangular sponge membrane to the temporary storage panel; and
in a case that rectangular sponge membranes are detected on the roving storage base and the temporary storage panel, sending, by the transfer panel, a demand request to the sponge membrane cutting machine, that is, stopping cutting the sponge membrane in a case of satisfying three conditions that rectangular sponge membranes are detected on the roving storage base, the temporary storage panel and the transfer panel;
step 4, in a case that the sponge membrane is detected on the roving storage base, grabbing, by the roving transfer mechanism, a columnar fiber roving from the protective film winding station to the roving storage base of the sponge membrane smoothing and pressing mechanism under transverse movement of a slide bracket, longitudinal movement of a slide arm and clamping of roving holding jaws, then loosening the sponge membrane pressing rollers, sinking the roving storage base under an action of a base slide seat, moving a rocker arm slide seat on a side towards a roving position, and rotating a roller shaft rocker arm upwards under an extending action of a rocker arm cylinder, such that the sponge membrane pressing rollers make contact with the sponge membrane and roll on a side surface of the roving by the roller shaft rocker arm until rolling to a top of the roving, in this case, sticking the adhesive tape on an upper side surface of the roving, then resetting the sponge membrane pressing rollers, and then sticking a double-sided adhesive tape of the other surface by a same action; and
then, grabbing, by the roving transfer mechanism, a wound roving to a discharge station under the transverse movement of the slide bracket, the longitudinal movement of the slide arm and the clamping of the roving holding jaws, and finishing sponge membrane winding action.
